## Europäisches Patentamt

## European Patent Office

## Office européen des brevets

(11) Publication number: **0 108 043**
**B1**

(12) **EUROPEAN PATENT SPECIFICATION**

(45) Date of publication of patent specification: **23.11.88**

(21) Application number: **83850277.1**

(22) Date of filing: **20.10.83**

(51) Int. Cl.⁴: **F 16 K 1/32, B 01 D 27/08**

(54) Valve mechanism with built-in purifying filter.

(30) Priority: **25.10.82 SE 8206034**

(43) Date of publication of application:
**09.05.84 Bulletin 84/19**

(45) Publication of the grant of the patent:
**23.11.88 Bulletin 88/47**

(84) Designated Contracting States:
**AT BE CH DE FR GB IT LI LU NL SE**

(56) References cited:
**CH-A- 610 211**
**DE-A-1 915 265**
**DE-A-2 535 902**
**GB-A- 488 994**
**US-A-2 936 790**
**US-A-3 400 821**

(73) Proprietor: **OSBY ARMATUR AB**
**Verkstadsgatan**
**S-283 00 Osby (SE)**

(72) Inventor: **Cato, Kenneth Y.**
**Kalhult**
**S-283 00 Osby (SE)**

(74) Representative: **Rostovanyi, Peter et al**
**AWAPATENT AB Box 5117**
**S-200 71 Malmö (SE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

A valve mechanism comprising a valve body having an inlet, an outlet and an opening located between said inlet and said outlet, a valve cone, a valve seat, a filter inserted in the valve body through the opening and enclosing the valve seat on the inlet side of the valve body, and a sump which is arranged between a bottom plate in the valve body and a bottom wall of the filter and in which particles retained by the filter are collected.

Valves in fluid pipes, for instance distant heating conduits, are very sensitive to impurities in the form of burrs and other particles which may be contained in the conduit system owing to negligent flushing of the pipes before the valves are mounted. It is therefore customary to insert ahead of the valve a purifying filter in the pipeline. This of course involves additional cost.

Prior art purifying filters generally are of cylindrical shape and disposed in such a manner in the pipeline that the contaminated liquid flows into the filter and escapes through the circumferential surface thereof for transmission to the valve. The filter must be opened at regular intervals for emptying and cleaning.

FR-A-2,459,416 discloses a purifying filter which surrounds the valve on the inlet side. After some time of use, a bank of impurities is built up against the filter wall, whereby the capacity of the filter is deteriorated. The valve mechanism must be dismounted and the filter flushed clean.

GB-A-488,994 discloses a valve mechanism having a filter on the inlet side. This valve mechanism also has a free space underneath the filter, in which particles retained by the filter can be collected. The inlet to this sump however consists of a number of narrow channels which can easily be clogged so as to obstruct the passage of the particles to the sump.

The object of the present invention is to provide a valve mechanism with built-in purifying filter which need not be dismounted, at least not as frequently as the purifying filters in the prior art valves.

According to the invention, this object is realized by means of a valve mechanism of the above-mentioned type, characterized in that an annular inlet gap to the sump is defined between the lower portion of the filter and the surrounding wall of the valve body and that the underside of the bottom wall is provided with distance members extending to the bottom plate so as to define said sump.

The advantages gained by the valve mechanism according to the invention are that the work of mounting the mechanism is facilitated and reduced in that one need not insert separate filters, and that the valve mechanism requires less maintenance in that the filter proper need not be emptied and/or dismounted nor cleaned to an equally large extent as is the case with prior art filters. Further, a free passage to the sump below the filter is ensured.

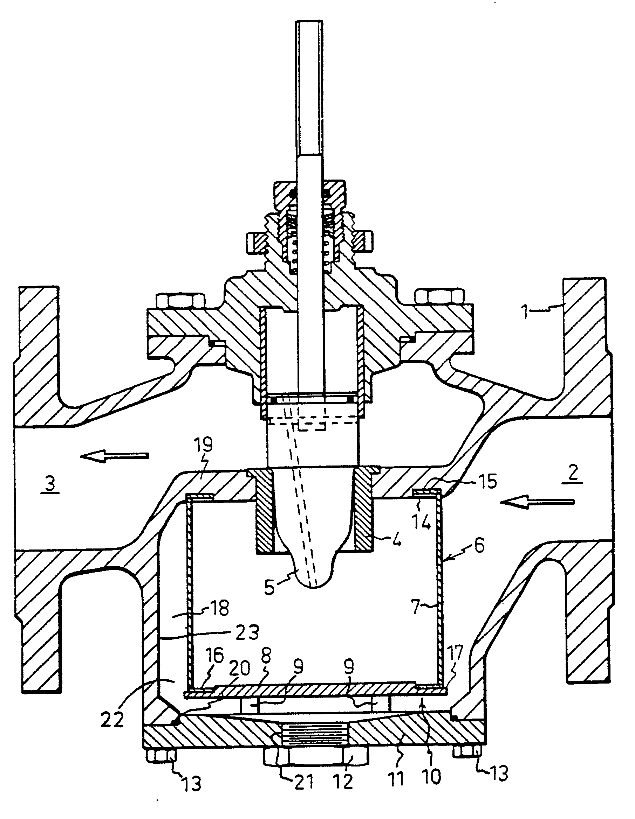

The invention will now be described in greater detail below with reference to an embodiment illustrated in the accompanying drawing which shows a section of a valve mechanism according to the invention.

The drawing shows a valve mechanism according to the invention, which consists of a valve body 1 having an inlet 2 and an outlet 3. The inlet is separated from the outlet by a partition 19 which accommodates a valve seat 4 in which a valve cone 5 is shiftable for control of the fluid flow between the inlet 2 and the outlet 3. A preferably cylindrical purifying filter 6 is detachably mounted in the valve body 1 around the valve seat 4. The filter consists of a fine-mesh netting 7 and a lower end wall 8 and is inserted through an opening 20 in the valve body.

The filter has an upper flange 15 which on mounting the filter is placed in an annular recess 14 in the partition 19, and also a lower flange 16 which forms a seat for the end wall 8 via an annular recess 17 therein.

The opening 20 in the valve body is closed by means of a bottom plate 11 which is screwed to the valve body with the aid of screws 13. The inner side of the bottom plate 11 is slightly cup-shaped and a through bore 21 in the bottom plate is closed by means of a drain plug 12.

The purifying filter 6 is supported on the bottom plate 11 by feet or distance members 9, only two of which are shown in the drawing. The distance members are placed in a circle at the periphery of the underside of the end wall 8 and are preferably secured to said end wall. By this arrangement there is formed below the purifying filter 6 a sump 10 for collection of particles in the fluid.

Fluid from the inlet 2 is distributed in an annular space 18 around the purifying filter and flows into the filter through the fine-mesh netting 7. Dirt particles retained by the netting fall down and are collected in the sump 10 which can readily be emptied by removal of the drain plug 12. On cleaning or exchange of the filter 6 the entire bottom plate 11 is screwed off, whereafter the filter can be readily removed through the opening 20 in the valve body 1.

It should be pointed out that other geometrical shapes of the filter can be employed, for instance filters of rectangular cross section.

## Claim

A valve mechanism comprising a valve body (1) having an inlet (2), an outlet (3) and an opening (20) located between said inlet and said outlet, a valve cone (5), a valve seat (4), a filter (6) inserted in the valve body (1) through the opening (20) and enclosing the valve seat (4) on the inlet side of the valve body (1), and a sump (10) which is arranged between a bottom plate (11) in the valve body (1) and a bottom wall (8) of the filter and in which particles retained by the filter are collected, characterized in that an annular inlet gap (22) to the sump (10) is defined between the lower portion of the filter (6) and the surrounding wall (23) of the valve body and that the underside of the bottom wall (8) is provided with distance members (9) extending to the bottom plate (11) so as to define said sump (10).

## Patentanspruch

Ventilmechanismus, umfassend ein Ventilgehäuse (1) mit einem Einlass (2), einem Auslass (3) und einer zwischen dem Einlass und dem Auslass angeordneten Öffnung (20), ferner einen Ventilkegel (5), einen Ventilsitz (4), ein Filter (6), das in das Ventilgehäuse (1) durch die Öffnung (20) eingeführt ist und den Ventilsitz (4) auf der Einlasseite des Ventilgehäuses (1) umschliesst, sowie einen Sumpf (10), der zwischen einer Bodenplatte (11) im Ventilgehäuse (1) und einer Bodenwand (8) des Filters angeordnet ist und die vom Filter zurückgehaltenen Teilchen auffängt, dadurch gekennzeichnet, dass zwischen dem unteren Teil des Filters (6) und der umgebenden Wand (23) des Ventilgehäuses ein ringförmiger Einlassspalt (22) zum Sumpf (10) abgegrenzt ist, und dass die untere Seite der Bodenwand (8) mit Abstandgliedern (9) versehen ist, die sich an die Bodenplatte (11) heranstrecken, um den Sumpf (10) abzugrenzen.

## Revendication

Mécanisme de vanne comportant un corps de vanne (1) ayant une entrée (2), une sortie (3) et une ouverture (20) prévue entre ladite entrée et ladite sortie, un cône de soupape (5), un siège de soupape (4), un filtre (6) introduit dans le corps de vanne (1) par ladite ouverture (20) et entourant ledit siège de soupape (4) du côté entrée du corps de vanne (1), et une poche de décantation (10) qui est disposée entre une plaque de fond (11) du corps de vanne (1) et une paroi de fond (8) dudit filtre et dans laquelle les particules retenues par le filtre sont ramassées, caractérisé par le fait qu'une fente annulaire d'entrée (22) à ladite poche de décantation (10) est définie entre la partie inférieure du filtre (6) et la paroi entourante (23) du corps de vanne, et que le côté inférieur de ladite paroi de fond (8) est muni d'organes d'écartement (9) s'étendant à ladite plaque de fond (11) de façon à définir ladite poche de décantation (10).